# EUROPÄISCHE PATENTANMELDUNG

(11) **EP 4 249 206 A1**
(43) Veröffentlichungstag der Anmeldung: **27.09.2023**
(21) Anmeldenummer: 23161388.6
(22) Anmeldetag: 13.03.2023
(51) Int. Cl.: B29C 45/76, B29C 45/84

(54) **VERFAHREN ZUR ÜBERWACHUNG EINES MASCHINENTEILS**

(30) Priorität: 17.03.2022 DE 102022106288
(71) Anmelder: KraussMaffei Technologies GmbH, 80997 München (DE)
(72) Erfinder: MOSER, Ralf, 80796 München (DE); GRIMM, Günther, 86567 Hilgertshausen (DE); Strauß, Martin, 81673 München (DE); Liebhold, Jens, 81243 München (DE); Matzel, Jürgen, 82239 Alling (DE); Dienel, Frank, 85467 Neuching (DE)
(74) Vertreter: Wilhelm, Ludwig

(57) **Zusammenfassung**

Verfahren zur Überwachung eines Maschinenteils, wobei Daten betreffend das Maschinenteil als solches in einem Maschinenteildatenspeicher gespeichert werden oder vorhanden sind, wobei Prozessgrößen gemessen werden, welche beim Betrieb des Maschinenteils anfallen, und wobei Messwerte zu diesen Prozessgrößen generiert, einer Steuerung der Maschine zugeführt und von einem Datenverarbeitungsprogramm ausgewertet werden. Erfindungsgemäß erfolgt eine wiederholte statistische Auswertung, wobei aus den Messwerten (=Rohdaten) Prozessgrößen einer ersten und weiterer Aggregationsstufen erzeugt und in einem Prozessdaten-Datenspeicher gespeichert werden. Dabei erfolgt jeweils eine Datenaggregation und jeweils eine Datenkomprimierung. Das Verfahren kann über den Lebenszyklus des Maschinenteils ausgeführt werden, wobei je nach statistischer Auswertung eine Kurzzeit-Historie und/oder eine Langzeit-Historie in dem Prozess-Datenspeicher abgebildet werden kann. Der Prozessdaten-Datenspeicher ist vorzugsweise integraler Bestandteil des Maschinenteils.

## Beschreibung

Die Erfindung betrifft ein Verfahren zur Überwachung eines Maschinenteils, nämlich eines Bauteils einer Maschine. Bei einem solchen Bauteil einer Maschine kann es sich um einen Mischkopf einer Reaktionsgießmaschine, ein Spritzgießwerkzeug, eine Plastifizierung einer Spritzgießmaschine, ein Roboter einer Produktionsmaschine, oder um andere Bauteile einer Maschine handeln. Dabei werden Daten betreffend das Maschinenteil als solches, insbesondere Daten betreffend den konstruktiven Aufbau, die Funktionsweise, und vorgeschriebene Betriebsdaten, in einem Maschinenteil-Datenspeicher gespeichert oder sind in einem Maschinenteil-Datenspeicher vorhanden. Prozessdaten, welche beim Betrieb des Maschinenteils anfallen, werden von der Steuerung der Maschine ausgewertet.

Das Dokument EP1724002B1 offenbart einen Mischkopf einer Reaktionsgießmaschine mit einem integrierten Schusszähler. Eine elektrische Erfassungs- und Speichereinrichtung ist fest in das Gehäuse des Mischkopfs integriert, insbesondere eingegossen (z.B. in einem Zylinderdeckel des Steuer- oder Reinigungskolbens). Neben der Anzahl der Schüsse können auch weitere Informationen in der Erfassungs- und Speichereinrichtung eingegeben und gespeichert werden. Insgesamt ist es möglich, die Historie eines Mischkopfs lückenlos zu dokumentieren.

Aus dem Dokument DE 20 2008 017 255 U1 ist es bekannt, ein internes Speichermedium zur Lebenszyklusmanagement-Datenablage (PLM = Product Lifecycle Management) für industrielle Werkzeuge zu verwenden. Offenbart ist eine Vorrichtung zum Speichern und Transportieren von während der gesamten Lebenszeit eines industriellen Werkzeugs anfallenden Daten zusammen mit diesem Werkzeug. Hierzu dient ein in das Werkzeug integrierter Datenspeicher, so dass die Daten immer am Ort des Werkzeugs zur Verfügung stehen. Bei einem solchen Werkzeug kann es sich beispielsweise um ein Spritzgießwerkzeug oder ein Stanzwerkzeug handeln. Es ist vorgesehen, dass Herstellungsdaten eines Werkzeugs bereits während der Fertigung direkt auf das Werkzeug gespeichert werden und die Herstellungsdaten direkt mit dem Werkzeug transportiert werden. Somit stehen diese an jedem Verwendungs- oder Lagerort direkt zur Verfügung.

Das Dokument EP1804997B1 offenbart eine Spritzgießmaschine umfassend ein Werkzeug mit einer Speichereinrichtung. Die Speichereinrichtung enthält Daten zur Inbetriebnahme des Werkzeugs, welche sich auf einen zu formenden Gegenstand beziehen. Es ist eine Vielzahl von Sensoren vorgesehen, die die Maschinensteuerung mit operativen Informationen aus dem Betrieb des Werkzeugs versorgt. Die Maschinensteuerung ist ausgebildet, um eine Speicherung solcher operativer Informationen in der Speichereinrichtung zu bewirken.

Das Dokument DE102020111942A1 offenbart ein Computerprogrammprodukt und ein Verfahren zum Überwachen eines Formwerkzeugs und/oder einer Formgebungsmaschine und/oder zumindest eines Peripheriegeräts. Die Ausführung des Computerprogrammprodukts erfolgt mittels eines Computers, bei dem es sich um eine zentrale Maschinensteuerung einer Formgebungsmaschine oder um einen separaten Computer handeln kann. Konstruktionsdaten und während der Nutzung anfallende Betriebsdaten (Nutzungsdaten) eines Formwerkzeugs werden bei der Ausführung des Computerprogrammprodukts in einem Formwerkzeugdatensatz gespeichert, welcher in einer elektronischen Datenbank angelegt ist. Die elektronische Datenbank ist in dem Computer vorhanden oder der Computer ist mittels einer Datenfernübertragungsverbindung mit der elektronischen Datenbank verbunden und kann an diese Daten senden und optional auch empfangen. Als Computer kann auch ein mobiler Computer wie z.B. ein Tablet verwendet werden. Daten des Formwerkzeugdatensatzes können durch das Computerprogrammprodukt aus dem gespeicherten Formwerkzeugdatensatz ausgelesen und dargestellt werden. In dem Formwerkzeugdatensatz in dem elektronischen Datenspeicher können alle einsatzrelevanten Daten während des Lebenszyklus eines Formwerkzeugs (d.h. solange damit Formteile produziert werden) gespeichert und dadurch mit diesem Formwerkzeug (oder einem dafür eindeutigen Identifikator) eindeutig verknüpft werden.

Der Erfindung liegt die Aufgabe zugrunde, ein Verfahren zur Überwachung eines Maschinenteils anzugeben, insbesondere eine Überwachung über den Lebenszyklus des Maschinenteils, bei welchem die der Überwachung dienende Datenmenge vergleichsweise gering gehalten wird.

Die Lösung dieser Aufgabe erfolgt durch ein Verfahren mit den Merkmalen von Anspruch 1. Vorteilhafte Ausgestaltungen und Weiterentwicklungen finden sich in den abhängigen Ansprüchen.

Gemäß einem Kerngedanken der vorliegenden Erfindung erfolgt eine sukzessive Komprimierung bzw. Reduzierung von Prozessdaten, die den Betrieb des Maschenteils betreffen. Demzufolge werden Messwerte zu einer bestimmten Prozessgröße während einer ersten Zeitspanne T1 erfasst und einer statistischen Auswertung zugeführt. Nach Ablauf oder während der ersten Zeitspanne T1 wird automatisch eine statistische Auswertung der in der ersten Zeitspanne T1 erfassten Messwerte vorgenommen. Hierbei wird eine Datenaggregation durchgeführt, wobei Prozessdaten PD1 einer ersten Aggregationsstufe erzeugt und in einem Prozessdaten-Datenspeicher gespeichert werden. Mit der Datenaggregation geht eine Datenkomprimierung einher und die Prozessdaten PD1 der ersten Aggregationsstufe bilden infolgedessen eine geringere Datenmenge als die in der ersten Zeitspanne T1 erfassten Messwerte. Die Erfassung von Messwerten zu dieser bestimmten Prozessgröße wird nach Ablauf der ersten Zeitspanne T1 während einer zweiten Zeitspanne T2 fortgesetzt. Die zweite Zeitspanne T2 schließt sich vorzugsweise unmittelbar an den Ablauf der ersten Zeitspanne T1 an. Insbesondere beim Dauerbetrieb des Maschinenteils wird sich die zweite Zeitspanne T2 unmittelbar an den Ablauf der ersten Zeitspanne T1 anschließen. Es kann aber auch vorkommen, dass das Maschinenteil (z.B. ein Mischkopf) ausgebaut wird. Ein Ausbau kann beispielsweise vorgesehen werden, wenn das Maschinenteil eingelagert oder überholt oder repariert werden soll. In einem solchen Fall wäre die nächste Zeitspanne nicht unmittelbar im Anschluss an die vorangegangene Zeitspanne. Die zweite Zeitspanne T2 würde sich also nicht unmittelbar an den Ablauf der ersten Zeitspanne T1 anschließen. Nach Ablauf oder während der zweiten Zeitspanne T2 wird automatisch eine statistische Auswertung der in der zweiten Zeitspanne T2 erfassten Messwerte vorgenommen, wobei erneut eine Datenaggregation durchgeführt wird. Es werden also erneut Prozessdaten PD1 der ersten Aggregationsstufe erzeugt und in dem Prozessdaten-Datenspeicher gespeichert. Auch diese erneut erzeugten Prozessdaten PD1 der ersten Aggregationsstufe bilden eine geringere Datenmenge als die in der zweiten Zeitspanne T2 erfassten Messwerte. Die vorgenannten Schritte werden über weitere Zeitspannen T3, T4, ... Tn wiederholt. Die jeweils vorgenommene Datenaggregation führt jeweils zu einer Datenkomprimierung.

Die Messwerte bilden sozusagen die Rohdaten für die Datenverarbeitung mittels statistischer Auswertung über eine oder mehrere Aggregationsstufen. Daher kann man vorliegend anstelle von "Messwerten" auch den Begriff "Rohdaten" verwenden.

Eine statistische Auswertung kann nach Ablauf der ersten Zeitspanne T1 vorgenommen werden. Die auszuwertenden Messwerte werden während der ersten Zeitspanne T1 erfasst und in einem geeigneten Messwert-Datenspeicher als Rohdaten zwischengespeichert. Nach Ablauf der ersten Zeitspanne kann der Messwert-Datenspeicher ausgelesen und automatisch eine statistische Auswertung der in der ersten Zeitspanne T1 erfassten Messwerte bzw. Rohdaten vorgenommen werden. Hierbei wird eine Datenaggregation durchgeführt, wobei Prozessdaten PD1 einer ersten Aggregationsstufe erzeugt und in dem Prozessdaten-Datenspeicher gespeichert werden.

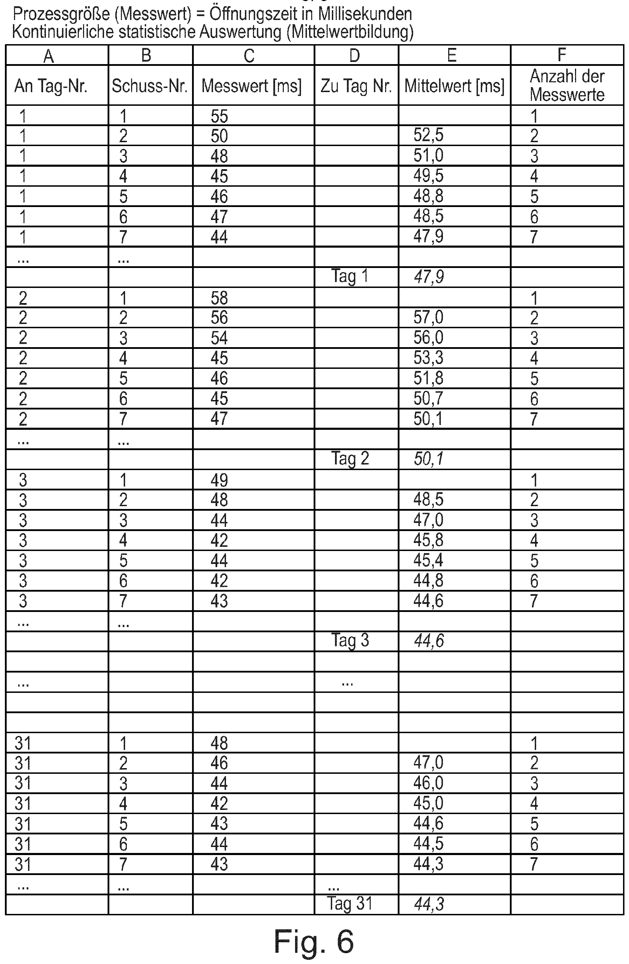

Eine statistische Auswertung kann auch während der ersten Zeitspanne T1 vorgenommen werden. Die auszuwertenden Messwerte werden während der ersten Zeitspanne T1 erfasst und sofort ausgewertet. Dies kann ab dem zweiten Messwert erfolgen. Es wird also zunächst eine erste statistische Auswertung aus zwei Messwerten vorgenommen (z.B. eine Mittelwert). Sobald ein dritter Messwert vorliegt, kann dieser Messwert mit der ersten statistischen Auswertung zusammengeführt und eine zweite statistische Auswertung vorgenommen werden. Bei einer Mittelwertbildung wird hierbei der Mittelwert gebildet aus dem Mittelwert der ersten statistischen Auswertung und dem dritten Messwert. Dies erfolgt in der Weise, dass eine Summe gebildet wird aus dem Mittelwert der ersten statistischen Auswertung multipliziert mit der Anzahl der vorhergehenden Messwerte (in diesem Falle also 2) und dem neuen Messwert, und diese Summe durch die komplette Anzahl an Messwerten dividiert wird, vorliegend also durch 3. Nachfolgend kann mit jeden neuen Messwert in gleicher Weise eine dritte, vierte, ... statistische Auswertung vorgenommen werden. Hierbei wird lediglich der Wert aus der letzten statistischen Auswertung mit dem neu erfassten Messwert gemäß der gewünschten statistischen Auswertung verarbeitet (z.B. Bildung eines Mittelwerts) und die Anzahl der Messwerte gemäß der gewünschten statistischen Auswertung berücksichtigt. Weitere Einzelheiten hierzu werden anhand der Figur 6 erläutert. Im Ergebnis handelt es sich um eine kontinuierliche statistische Auswertung von Messwerten während der ersten Zeitspanne T1 bis zum Ablauf der Zeitspanne T1. Hierbei wird ebenfalls eine Datenaggregation durchgeführt, wobei nach Ablauf der Zeitspanne T1 Prozessdaten PD1 einer ersten Aggregationsstufe vorliegen und in dem Prozessdaten-Datenspeicher gespeichert werden.

Letztendlich werden die vorgenannten Schritte über einen längeren Zeitraum, vorzugsweise während des Lebenszyklus des Maschinenteils, und besonders bevorzugt über den gesamten Lebenszyklus des Maschinenteils, durchgeführt. Die beim Betrieb des Maschinenteils anfallenden Prozessdaten werden somit kontinuierlich über einen längeren Zeitraum und insbesondere während des Lebenszyklus des Maschinenteils erfasst und von der Maschinensteuerung derjenigen Maschine ausgewertet, auf der dieses Maschinenteil benutzt wird. Lediglich die über die eine oder mehreren Aggregationsstufen erzeugten Prozessdaten werden über eine längere Zeit in dem Prozessdaten-Datenspeicher gespeichert.

Gemäß einer Weiterentwicklung der Erfindung ist vorgesehen, dass nach einer gewissen Zeit, d.h. wenn eine sinnvolle Anzahl an Prozessdaten PD1 einer ersten Aggregationsstufe vorliegt, diese Prozessdaten automatisch einer weiteren statistischen Auswertung zugeführt werden.

Nach Ablauf einer Mehrzahl von Zeitspannen T1+T2+T3... ist demzufolge vorgesehen, dass eine statistische Auswertung von Prozessdaten PD1 der ersten Aggregationsstufe aus allen abgelaufenen Zeitspannen oder zu einer Anzahl an ausgewählten abgelaufenen Zeitspannen erfolgt. Dabei werden Prozessdaten PD2 einer zweiten Aggregationsstufe erzeugt und in dem Prozessdaten-Datenspeicher gespeichert. Die Erzeugung von Prozessdaten PD2 der zweiten Aggregationsstufe wird vorzugsweise in regelmäßigen Zeitabständen wiederholt.

Gemäß einer vorteilhaften Ausführungsform der Erfindung ist vorgesehen, dass nach einer gewissen Zeit, d.h. wenn eine sinnvolle Anzahl an Prozessdaten PD2 der zweiten Aggregationsstufe vorliegt, diese Prozessdaten automatisch einer weiteren statistischen Auswertung zugeführt werden. Nach Ablauf einer Mehrzahl von Zeitspannen T1+T2+T3... ist demzufolge vorgesehen, dass automatisch eine statistische Auswertung von Prozessdaten PD2 der zweiten Aggregationsstufe aus allen abgelaufenen Zeitspannen oder zu einer Anzahl an ausgewählten abgelaufenen Zeitspannen erfolgt, wobei Prozessdaten PD3 einer dritten Aggregationsstufe erzeugt und in dem Prozessdaten-Datenspeicher gespeichert werden, wobei die Erzeugung von Prozessdaten PD3 der dritten Aggregationsstufe vorzugsweise in regelmäßigen Zeitabständen wiederholt wird.

Als Zeitspanne Tn (n = 1, 2, 3, ...) für die Erfassung von Messwerten zu einer Prozessgröße kann eine Zeitspanne von mehreren Stunden, vorzugsweise ein Tag, vorgesehen sein. Die statistische Auswertung ergibt somit einen Stundendatensatz an Prozessdaten PD1 einer ersten Aggregationsstufe (Stunden-Aggregation) oder einen Tagesdatensatz an Prozessdaten PD1 einer ersten Aggregationsstufe (Tages-Aggregation).

Gemäß einer Ausführungsform kann die Erzeugung von Prozessdaten PD1 der ersten Aggregationsstufe über einen Zeitraum von mehreren Tagen, vorzugsweise über einen Zeitraum von einer Woche, vorgenommen werden, wobei die statistische Auswertung der Prozessdaten PD1 der ersten Aggregationsstufe je nach Art der statistischen Auswertung einen Tagesdatensatz (Tages-Aggregation) PD2 an Prozessdaten PD2 einer zweiten Aggregationsstufe oder einen Wochendatensatz (Wochen-Aggregation) PD2 an Prozessdaten PD2 einer zweiten Aggregationsstufe ergibt.

Ferner kann die Erzeugung von Prozessdaten PD2 der zweiten Aggregationsstufe über einen Zeitraum von mehreren Wochen, vorzugsweise über einen Zeitraum von einem oder mehreren Monaten, vorgenommen werden, wobei die statistische Auswertung der Prozessdaten PD2 der zweiten Aggregationsstufe je nach Art der statistischen Auswertung einen Wochendatensatz (Wochen-Aggregation) PD3 an Prozessdaten PD3 einer dritten Aggregationsstufe oder einen Monatsdatensatz (Monats-Aggregation) PD3 an Prozessdaten PD3 einer dritten Aggregationsstufe ergibt.

Bedarfsweise können nach Ablauf von vorgebbaren Zeiträumen mehrere oder alle Prozessdaten PD3 der dritten Aggregationsstufe einer weiteren statistischen Auswertung zugeführt und Prozessdaten PD4 einer vierten Aggregationsstufe erzeugt werden.

Gemäß einer vorteilhaften Ausführungsform der Erfindung kann vorgesehen werden, dass Prozessdaten PD1 einer ersten Aggregationsstufe und/oder Prozessdaten PD2 einer zweiten Aggregationsstufe und/oder Prozessdaten PD3 einer dritten Aggregationsstufe und/oder Prozessdaten PD4 einer vierten Aggregationsstufe nach Ablauf eines vorgebbarem Zeitraums gelöscht werden. Dabei können für Prozessdaten unterschiedlicher Aggregationsstufen auch unterschiedliche Zeiträume vorgesehen sein, nach deren Ablauf die Löschung der jeweiligen Prozessdaten bzw. der Prozessdaten der jeweiligen Aggregationsstufe in dem Prozessdaten-Datenspeicher vorgenommen wird.

Das Verfahren ist insbesondere dann von Vorteil, wenn sich der Maschinenteil-Datenspeicher und/oder der Prozessdaten-Datenspeicher an oder in dem Maschinenteil befinden. Dabei können sie vorzugsweise einen gemeinsamen Datenspeicher bilden. Demzufolge ist an dem zu überwachenden Maschinenteil eine Speichereinrichtung vorhanden, beispielsweise ein Speicherchip, die den Maschinenteil-Datenspeicher oder den Prozessdaten-Datenspeicher, vorzugsweise jedoch beide Datenspeicher, enthält und welche mit dem Maschinenteil "mitwandert". Eine solche Speichereinrichtung verfügt über einen begrenzten Speicherplatz. Mit dem erfindungsgemäßen Verfahren kann sichergestellt werden, dass die maximale Speicherkapazität während des Lebenszyklus nicht erreicht wird. Die Speicherkapazität ist ausreichend für alle ausgewerteten Prozessdaten. Selbstverständlich muss dabei darauf abgestellt werden, welche Datenmenge in etwa zu erwarten ist.

Am längsten in die Vergangenheit zurück reichen die Prozessdaten der höchsten verwendeten Aggregationsstufe. Wenn eine statistische Auswertung über vier Aggregationsstufen vorgenommen wird, reichen die Prozessdaten PD4 der vierten Aggregationsstufe am längsten in die Vergangenheit zurück, sofern ein Bedarf für die Speicherung von solchen Prozessdaten PD4 einer vierten Aggregationsstufe besteht. Die weiteren Prozessdaten PD3, PD2 und PD1 der dritten, zweiten und ersten Aggregationsstufe erfassen jeweils kürzere Zeiträume, wobei für die einzelnen Zeiträume folgendes gilt. Der Zeitraum für PD3 ist größer als der Zeitraum für PD2 und dieser ist größer als der Zeitraum für PD1.

Vorzugsweise betrachtet PD1 einen Zeitraum von einem Tag und stellt einen Tagesdatensatz dar. Der Tagesdatensatz ist ein Datensatz an ausgewerteten Messwerten, welche über einen Zeitraum von einem (1) Tag erfasst werden. Mit anderen Worten ausgedrückt bedeutet dies: die Messwerte werden über einen Zeitspanne von Tag erfasst und statistisch ausgewertet, wobei Prozessdaten PD1 der ersten Aggregationsstufe erzeugt werden, die den Tagesdatensatz PD1 oder die Tages-Aggregation PD1 darstellen.

Vorzugsweise betrachtet PD2 eine Woche und stellt einen Wochendatensatz dar. Der Wochendatensatz ist ein Datensatz an ausgewerteten Prozessdaten PD1 der ersten Aggregationsstufe, welche über einen Zeitraum von einer (1) Woche erfasst werden. Man kann insoweit auch von einer Wochen-Aggregation sprechen.

Vorzugsweise betrachtet PD3 einen Monat und stellt einen Monatsdatensatz dar. Der Monatsdatensatz ist ein Datensatz an ausgewerteten Prozessdaten PD2 einer zweiten Aggregationsstufe, welche über einen Zeitraum von einem (1) Monat erfasst werden. Man kann insoweit auch von einer Monats-Aggregation sprechen.

Durch dieses Vorgehen kann über einen längeren Zeitraum, insbesondere über den Lebenszyklus eines Maschinenteils gesehen, sehr gut zum einen die Kurzzeit-Historie als auch eine Langzeit-Historie ermittelt werden, ohne allzu große Datenmengen speichern zu müssen. Als Kurzzeit-Historie können die Prozessdaten PD1 der ersten Aggregationsstufe und gegebenenfalls die Prozessdaten PD2 der zweiten Aggregationsstufe angesehen werden. Als Langzeit-Historie können die Prozessdaten PD3 der dritten Aggregationsstufe und gegebenenfalls die Prozessdaten PD4 der vierten Aggregationsstufe angesehen werden.

Die Steuerung derjenigen Maschine, in welcher das Maschinenteil eingesetzt und betrieben wird, erkennt das Maschinenteil (z.B. anhand einer Codierung oder aufgrund der vorhandenen Maschinenteil-Daten auf dem verbauten Speicherchip), und liest gegebenenfalls bereits vorhandene Maschinenteil-Daten aus dem Maschinenteil-Datenspeicher ein, insbesondere Daten betreffend den konstruktiven Aufbau, die Funktionsweise, und vorgeschriebene Betriebsdaten.

Die Steuerung erkannt das Maschinenteil auch, wenn es neu in die Maschine eingesetzt wird; so können beispielsweise Maschinenteile verschiedener Größe und Leistungsbereiche (z.B. Mischköpfe verschiedener Größe mit verschiedener Austragsleistung) an einer Maschine betrieben werden. Ein ausgebautes und eingelagertes Maschinenteil wird beim erneuten Einbau wiederum von der Steuerung erkannt, und die Maschinenteildaten können von der jeweiligen Steuerung ausgelesen werden. Das Maschinenteil kann auch lediglich codiert sein und der Maschinenteil-Datenspeicher kann in einer Cloud liegen / Cloud-basiert abgespeichert sein und aus dieser ausgelesen werden. Gleichermaßen können auch die Prozessdaten in ihren unterschiedlichen Aggregationsstufen von verschiedenen Maschinensteuerungen (jeweils derjenigen Maschine in der das Maschinenteil betrieben wird) beschrieben werden. Die Speicherung ist also unabhängig von der jeweiligen Maschine und "wandert" mit dem Maschinenteil mit. Handelt es sich um eine Cloud-basierte Speicherung, so wird die Codierung des Maschinenteils ausgelesen und die Prozessdaten in den Cloud-Speicher geschrieben.

In Bezug auf einen Mischkopf einer Reaktionsmaschine oder ein Spritzgießwerkzeug kann folgendes vorgesehen sein. Beim Einsatz und Betrieb des Maschinenteils wird der erste Schuss mit Datum und Zeit auf den externen Datenspeicher geschrieben; ebenfalls der jeweils letzte Schuss vor dem Ende einer vorbestimmten Zeitspanne mit Datum und Zeit auf den externen Datenspeicher geschrieben. Dadurch wird die Einsatzdauer des Maschinenteils genau erkenntlich. Die Bezeichnung "externer Datenspeicher" bedeutet die Verwendung eines Datenspeichers außerhalb der Maschinensteuerung. Dies kann vorzugsweise ein Speicherchip sein, der an oder in dem Maschinenteil verbaut ist. Es kann sich aber auch um eine Cloud-basierte Speicherung handeln.

Ebenso kann ein Datenspeicher bzw. Datenfeld "Schusszähler" vorgesehen sein, welcher täglich mit neu getätigten Schüssen aufaddiert wird, so dass die Anzahl an Zyklen (Schüssen) im Laufe des Lebenszyklus bzw. der Lebensdauer des Maschinenteils genau erkenntlich wird.

Die Maschinenteil-Daten können auch Grenzen in der Betriebsweise umfassen. Solche Grenzen können von der Maschinensteuerung gelesen werden und die Einstellmöglichkeiten für den Betrieb des Maschinenteils begrenzen oder zumindest vor Einstellungen jenseits dieser Grenzen warnen.

Bedarfsweise kann ein Datenspeicher vorgesehen sein, in welchem die Service-Historie des Maschinenteils beschrieben ist.

Soweit vorstehend von Datenspeicher die Rede ist, können hierunter räumlich getrennte Datenspeicher, insbesondere getrennte Speicherchips, sowie auch softwaremäßig getrennte Datenfelder in einem gemeinsamen Datenspeicher, insbesondere in einem gemeinsamen, einzigen Speicherchip, verstanden werden. Letztendlich kommt es darauf an, unterschiedliche Typen oder Arten von Daten in geeigneter Weise auf einem Datenspeicher zu sortieren. Beispielsweise kann ein erster Datenspeicher oder ein erstes Datenfeld für Maschinenteil-Daten vorgesehen sein (Maschinenteil-Datenspeicher) und ein zweiter Datenspeicher oder ein zweites Datenfeld für Prozessdaten (Prozessdaten-Datenspeicher). Jeder dieser Datenspeicher bzw. jedes dieser Datenfelder kann im Bedarfsfall in weitere Datenfelder unterteilt werden. Beispielsweise können für die Prozessdaten unterschiedlicher Aggregationsstufen auch unterschiedliche Datenfelder vorgesehen sein.

Der Datenspeicher kann ausgeführt sein als Speicherchip (z.B. Flash, Eeprom, etc.), der von einem Mini-PC (z.B. Rhaspberry Pie) beschrieben wird und mit je einem elektronischen Feldbus (z.B. I²C, CAN, ProfiNet, etc.) mit der Maschinensteuerung und dem Speicherchip verbunden ist. Eine alternative Ausführungsvariante kann eine Elektronikkomponente sein, die mit einem elektronischen Feldbussystem (z.B. idealerweise ProfiNet, aber auch CAN, etc.) mit der Maschinensteuerung verbunden ist, wobei die Maschinensteuerung direkt über das Feldbussystem auf den Datenspeicher der Elektronikkomponente schreibt. Gegegbenenfalls kann die Elektronikkomponente die Datenaggregation durchführen. Die Maschinensteuerung erkennt selbständig die Position der Elektronikkomponente im elektronischen Feldbussystem.

Nachfolgend sollen einige Beispiele für Prozessdaten und Maschinenteildaten zu unterschiedlichen Maschinenteilen angegeben werden.

### a) Mischkopf

Zunächst soll es sich bei dem Maschinenteil um einen Mischkopf einer Reaktionsmaschine handeln. Dabei kann es sich um eine Reaktionsgießmaschine für das offene Schäumen handeln, d.h. der Austrag aus dem Mischkopf erfolgt in ein geöffnetes Werkzeug. Der Mischkopf kann aber auch für das geschlossene Schäumen verwendet werden, d.h. der Austrag aus dem Mischkopf erfolgt in ein geschlossenes Werkzeug. Daher könnte man in diesem Fall von einer Reaktions-Injektions-Maschine sprechen (englisch RIM = reaction injection molding)

Bei einem solchen Mischkopf kann es sich um Messwerte zu den nachfolgend genannten Prozessgrößen handeln und zwar in Bezug auf jeden verwendeten Mischkopf.
- Schließzeit des Steuerkolbens: Es handelt sich um die sogenannte Steuerkolbenlaufzeit zum Schließen des Mischkopfs. Das ist diejenige Zeit, welche der Steuerkolben des Mischkopfs benötigt, um von einer Position entsprechend einem geöffneten Zustand des Mischkopfs in eine Position entsprechend einem geschlossenen Zustand des Mischkopfs zu gelangen.
- Öffnungszeit des Steuerkolbens: Es handelt sich um die sogenannte Steuerkolbenlaufzeit zum Öffnen des Mischkopfs. Das ist diejenige Zeit, welche der Steuerkolben des Mischkopfs benötigt, um von einer Position entsprechend einem geschlossenen Zustand des Mischkopfs in eine Position entsprechend einem geöffnetem Zustand des Mischkopfs zu gelangen.
- Schusszeit: Es handelt sich diejenige Zeit, in welcher der Mischkopf geöffnet ist bzw. sich im geöffneten Zustand befindet.
- Zeit zwischen zwei aufeinanderfolgenden Schüssen: Es handelt sich um die Zeit zwischen einem geschlossenen Zustand des Mischkopfs bis zum Erreichen des nächsten geöffneten Zustands des Mischkopfs. Eine solche Zeit liegt insbesondere bei einem Wechsel von einer Austragsposition zu einer anderen Austragsposition vor. Beispielsweise kann eine erste Austragsposition in einem ersten Werkzeug und eine zweite Austragsposition in einem zweiten Werkzeug vorliegen.
   Soweit vorstehend der Begriff "Zeit" angegeben ist, handelt sich um eine Zeitspanne zwischen zwei Zeitpunkten.
- Gesamtschusszahl: Es handelt sich um die Anzahl an Schüssen, welche in einem Betrachtungszeitraum von dem Steuerkolben durchgeführt worden sind. Als Betrachtungszeitraum kann jede beliebige Zeitspanne vorgesehen werden, zum Beispiel ein Tag, eine Woche oder ein Monat.
- Gesamtzahl von Reinigungskolben-Hüben: Es handelt sich um die Anzahl an Hüben, welche in einem Betrachtungszeitraum von dem Reinigungskolben durchgeführt worden sind. Als Betrachtungszeitraum kann jede beliebige Zeitspanne vorgesehen werden, zum Beispiel ein Tag, eine Woche oder ein Monat.

In Bezug auf die einem Mischkopf zugeführten und von diesem ausgetragenen Komponenten können pro Mischkopf und pro Komponente Messwerte zu folgenden Prozessgrößen in Betracht kommen (häufig handelt es sich um zwei bis sechs Komponenten): Durchfluss (= Volumenstrom bzw. Massestrom), Druck, Temperatur, etc.

Es kann vorkommen, dass zwei Mischköpfe jeweils mit einer Mehrzahl von gleichen Komponenten betrieben werden. In diesem Fall kann es in Bezug auf jeden der beiden Mischköpfe unterschiedliche Messwerte zu gleichen Prozessgrößen geben, beispielsweise zu den vorgenannten Prozessgrößen.

Die Messwerte zu den Prozessgrößen können an unterschiedlichen Stellen der Dosiermaschine durch geeignete Sensoren erfasst werden. Die gleiche Prozessgröße (z.B. Temperatur einer bestimmten Komponente) kann auch mehrfach gemessen werden. Beispielsweise kann die Temperatur einer bestimmten Komponente sowohl im Tagesbehälter (Vorratsbehälter) als auch in der Hochdruckleitung direkt vor dem Mischkopf gemessen werden. In einem solchen Fall hätte man Temperaturmesswerte bezogen auf zwei bestimmte, räumlich voneinander getrennte bzw. beabstandete Messpunkte. Als weiteres Beispiel kann der Druck in der Hochdruckleitung nach der Dosierpumpe und direkt vor dem Mischkopf gemessen werden. In einem solchen Fall hätte man Druckmesswerte bezogen auf zwei bestimmte, räumlich voneinander getrennte bzw. beabstandete Messpunkte.

Bei den Prozessdaten PD1 der ersten Aggregationsstufe handelt es sich um eine statistische Auswertung. Hierbei kann es sich beispielsweise um folgende Daten handeln: Mittelwert, Minimum und Maximum der Messwerte und zwar bezogen auf einen beliebigen Betrachtungszeitraum. Als Betrachtungszeitraum kann ein Tag, eine Woche, ein Monat oder ein sonstiger beliebiger Zeitraum vorgesehen werden. Ferner kann auch eine Abweichung vom Mittelwert ermittelt werden, beispielsweise eine Standard-Abweichung.

Zusätzlich zu der rein statistischen Auswertung der Messdaten für bestimmte Prozessgrößen kann es vorteilhaft sein, ausgewählte Prozessgrößen oder Prozessdaten miteinander zu koppeln, was nachfolgend anhand von Beispielen näher erläutert werden soll.

Beispielsweise kann in Bezug auf eine bestimmte Komponente der Druck in der Komponentendüse am Mischkopf mit der Austragsleistung dieser Komponente gekoppelt werden. Unter "Austragsleistung" versteht man den Volumenstrom (= Volumen pro Zeiteinheit). Diesbezüglich können folgende Zusammenhänge in den Prozessdaten der ersten, zweiten, dritten, ... Aggregationsstufe ermittelt und gespeichert werden:
- Minimale Austragsleistung - Druck bei minimaler Austragsleistung
- Maximale Austragsleistung - Druck bei maximaler Austragsleistung

Das kann aufgrund folgender Überlegung von Vorteil sein. Im Mischkopf wird eine bestimmte Komponente durch deren zugehörige Komponentendüse gefahren und in die Mischkammer des Mischkopfs eingebracht. Bei gleichen Austragsleistungen und gleicher Viskosität stellt sich über die Komponentendüse mit festem Durchmesser normalerweise immer der gleiche Druck ein. Steigt der Druck bei gleicher Austragsleistung (z.B. bei der maximalen Austragsleistung), so kann das ein Indiz dafür sein, dass die Komponentendüse verschmutzt ist. Fällt hingegen der Druck, so kann dies darauf hindeuten, dass die Komponentendüse verschlissen ist und ihren Durchmesser geändert hat.

Unter Umständen kann es sogar sinnvoll sein, mehrere Prozessgrößen miteinander zu koppeln und Zusammenhänge in den Prozessdaten erster, zweiter, dritter, ... Aggregationsstufe zu ermitteln und zu speichern:
- Minimale Austragsleistung - Druck und Temperatur bei minimaler Austragsleistung
- Maximale Austragsleistung - Druck und Temperatur bei maximaler Austragsleistung

Da bei vielen Komponenten die Viskosität von der Temperatur abhängig ist, kann somit der Temperatureinfluss auf die Viskosität und den entstehenden Druck ebenfalls mitbetrachtet werden.

Die Prozessdaten PD2 der zweiten Aggregationsstufe können aus den Prozessdaten PD1 der ersten Aggregationsstufe durch die gleiche statistische Auswertung erzeugt werden wie oben die Prozessdaten PD1 der ersten Aggregationsstufe erzeugt worden sind, jedoch bezogen auf einen anderen Betrachtungszeitraum. Beispielsweise kann es sich bei den Prozessdaten PD2 der zweiten Aggregationsstufe um Minimum, Maximum und Mittelwert der Prozessdaten PD1 der ersten Aggregationsstufe handeln und zwar bezogen auf einen beliebigen Betrachtungszeitraum. Der Betrachtungszeitraum für die Erzeugung der Prozessdaten PD2 der zweiten Aggregationsstufe ist jedoch größer als der Betrachtungszeitraum für die Erzeugung der Prozessdaten PD1 der ersten Aggregationsstufe. Nachfolgend sollen einige Beispiele für Betrachtungszeitraume bei der Erzeugung von Prozessdaten der ersten und zweiten Aggregationsstufe genannt werden. In Bezug auf Prozessdaten PD1 der ersten Aggregationsstufe kann als Betrachtungszeitraum ein Tag vorgesehen werden. Man kann insoweit auch von einem Tagesdatensatz oder einer Tages-Aggregation sprechen. In Bezug auf Prozessdaten PD2 der zweiten Aggregationsstufe kann ein Betrachtungszeitraum eine Woche (Wochendatensatz bzw. Wochen-Aggregation) sein. Alternativ kann als Betrachtungszeitraum auch ein Monat vorgesehen werden (Monatsdatensatz bzw. Monats-Aggregation).

Falls erforderlich oder gewünscht können beliebige Prozessdaten n-ter Aggregationsstufe erzeugt werden. Beispielsweise könnte für Prozessdaten PD3 einer dritten Aggregationsstufe ein Betrachtungszeitraum von mehreren Monaten und für Prozessdaten PD4 einer vierten Aggregationsstufe ein Betrachtungszeitraum von einem oder mehreren Jahren vorgesehen werden.

Neben den beim Betrieb des Mischkopfs anfallenden Messwerten zu Prozessgrößen können auch Maschinenteil-Daten in einem geeigneten Datenspeicher und insbesondere gekoppelt oder datentechnisch verbunden zu den Prozessdaten gespeichert sein oder werden. Typische Maschinenteil-Daten können sein: Bezeichnung (z.B. MK12-34), Seriennummer, Daten zu Leistungsbereichen und anderes mehr.

Ein Mischkopf findet seine Verwendung bei der Herstellung von Kunststoff-Formteilen auf Basis von Polyurethan. Hierbei werden die Komponenten Polyol und Isocyanat dem Mischkopf zugeführt, in einer Mischkammer des Mischkopfs miteinander vermischt und das Gemisch ausgetragen. Das Gemisch reagiert aus und bildet ein Kunststoff-Formteil aus Polyurethan, abgekürzt PUR. Alternativ zur PUR-Herstellung und PUR-Verarbeitung können auch andere Reaktivkunststoffe wie zum Beispiel Epoxidharz (aus den Komponenten Harz und Härter), Polyamid bzw. Nylon (aus katalysiertem Caprolactam und aktiviertem Caprolactam), DPCD, etc. hergestellt und verarbeitet werden. Für die Herstellung dieser Reaktivkunststoffe können 2 bis n Komponenten verarbeitet werden, deren Dosierstrang jeweils aus Tagesbehälter (Vorratsbehälter), Dosierpumpe, Volumenstromzähler sowie Leitungssystem zum Mischkopf besteht.

Gemäß einer weiteren Ausführungsform der Erfindung können auch sogenannte Mehrstationen-Maschinen betrachtet werden, bei denen eine Dosiermaschine mehrere Mischköpfe betreibt, die durch Umschalteinheiten (Sitzventile, pneumatisch oder elektrisch betriebene Kugelhähne oder ähnlichem) umgeschaltet werden können, und über die nacheinander ein PUR-Gemisch oder ein anderer Reaktivkunststoff ausgetragen wird. Bei einer solchen Mehrstationen-Maschine würden somit Prozessgrößen zu den verschiedenen Mischköpfen anfallen und diese Prozessgrößen können in erfindungsgemäßer Weise einer statistischen Auswertung zugeführt werden.

### b) Spritzgießwerkzeug

Gemäß einer weiteren Ausführungsform der Erfindung kann es sich bei dem Maschinenteil um ein Spritzgießwerkzeug einer Spritzgießmaschine. In diesem Fall kann es sich um Messwerte zu den nachfolgend genannten Prozessgrößen handeln: Einspritzzeit, Einspritzarbeit, Zykluszeit, Schließkraft, Temperaturen im Werkzeug, Werkzeuginnendruck, Anzahl von Einspritzvorgängen, Anzahl an Fehlermeldungen, Werkzeugnummer, Artikelnummer, ...

Als Maschinenteil-Daten können in Betracht kommen: Maschinentype, Baureihentype, Seriennummer, Daten zu Leistungsbereichen und anderes mehr.

### c) Plastifizierung einer Spritzgießmaschine

In Bezug auf eine Plastifizierung einer Spritzgießmaschine können folgende Messwerte betrachtet werden: Einspritzdruck, Einspritzarbeit, Anzahl an Temperaturzonen und Temperatur dort, Leistung der Heizelemente, Anzahl von Gebläseeinrichtungen und diesbezüglicher Messwerte, Anzahl an und Messwerte in Wasserkühlkreisen, Durchmesser einer Schnecke und/oder eines Zylinders, Plastifizierungsvolumen, Art des und Messwerte zum Düsenverschluss, Anzahl an Einspritzvorgängen, Fehlermeldungen, ...

Als Maschinenteil-Daten können in Betracht kommen: Plastifizierungstype, Seriennummer, Daten zu Leistungsbereichen und anderes mehr.

### d) Das Maschinenteil ist ein Roboter

Gemäß einer weiteren Ausführungsform der Erfindung kann es sich bei dem Maschinenteil um einen Roboter handeln, insbesondere einen Roboter, welcher mit einer Spritzgießmaschine kombiniert ist. In diesem Fall kann es sich um Messwerte zu den nachfolgend genannten Prozessgrößen handeln: Anzahl aktiver Achsen, Fahrzeiten der einzelnen Achsen, Entnahmezeit, Zykluszeit, Fahrgeschwindigkeiten der einzelnen Achsen, Laufleistung der einzelnen Achsen, Temperatur der Antriebe, Spritzteilegewicht, Fehlermeldungen, ...

### Als Maschinenteil-Daten können in Betracht kommen: Robotertype, Baureihentype, Seriennummer, Daten zu Leistungsbereichen und anderes mehr

Unabhängig von den vorstehend betrachteten Maschinenteilen gilt für jede Art von Maschinenteil folgendes. Gemäß einem allgemeinen Gedanken der vorliegenden Erfindung führt die statistische Auswertung der Messwerte zur Erzeugung von Prozessdaten einer ersten Aggregationsstufe, und jede weitere statistische Auswertung zu Prozessdaten einer nächst höheren Aggregationsstufe. Dabei kann für jedes beliebige Maschinenteil in analoger oder ähnlicher Weise wie oben im Zusammenhang mit dem Mischkopf beschrieben vorgegangen werden. Insbesondere in den vorgenannten Fällen von Maschinenteilen, nämlich a)Spritzgießwerkzeug, b)Plastifizierung und d)Roboter, kann in analoger oder ähnlicher Weise wie oben im Zusammenhang mit einem Mischkopf beschrieben vorgegangen werden. Je nach Messwerten können geeignete Betrachtungszeiträume festgelegt werden, um Prozessdaten einer ersten Aggregationsstufe und gegebenenfalls weiterer Aggregationsstufen zu erzeugen. Die statistische Auswertung kann sich auch hier auf Typen wie Minimum, Maximum, und Mittelwert beziehen. Damit ergäbe sich folgende Situation:
- Prozessdaten PD1 einer ersten Aggregationsstufe: Minimum, Maximum und Durchschnitt von Messwerten.
- Prozessdaten PD2 einer zweiten Aggregationsstufe: Minimum, Maximum und Durchschnitt von Prozessdaten PD1 der ersten Aggregationsstufe.
- Prozessdaten PD3 der dritten Aggregationsstufe: Minimum, Maximum und Durchschnitt von Prozessdaten PD2 der zweiten Aggregationsstufe.

Grundsätzlich können aber auch andere als die vorgenannten Typen für eine statistische Auswertung herangezogen werden.

Grundsätzlich kann erfindungsgemäß auch vorgesehen werden, dass zusätzlich zu einer rein statistischen Auswertung von Messwerten und von Prozessdaten einer Aggregationsstufe eine Kopplung von ausgewählten Prozessgrößen vorgenommen wird. Beispiele hierzu sind im Zusammenhang mit einem Mischkopf als Maschinenteil weiter oben genannt worden. Eine solche Kopplung kann auch in Bezug auf andere Maschinenteile in Betracht kommen.

Die Prozessdaten der ersten und jeder weiteren Aggregationsstufe können oder werden in einem Prozessdaten-Datenspeicher gespeichert. Gemäß einem Gedanken der vorliegenden Erfindung führt die wiederholte statistische Auswertung von Messwerten über mehrere Aggregationsstufen hinweg zu jeweils neuen Prozessdaten mit jeweils einer geringeren Datenmenge. Die statistische Auswertung erfolgt zu zunehmenden Betrachtungszeiträumen. Je höher die Aggregationsstufe ist, desto größer ist der erfasste Betrachtungszeitraum. Hier ein Beispiel: mehrere Tagesdatensätze bzw. Tages-Aggregationen werden statistisch ausgewertet und ergeben einen Wochendatensatz (Wochen-Aggregation) oder einen Monatsdatensatz (Monats-Aggregation). Durch die statistische Auswertung wird die Gesamtdatenmenge von Stufe zu Stufe der statistischen Auswertung, also von einer Aggregationsstufe zur nächsthöheren Aggregatsstufe, geringer. Es kann vorgesehen werden, dass in der Vergangenheit angefallene Messwerte bzw. Rohdaten gelöscht werden, wenn eine bestimmte Zeitdauer beim Betrieb des betrachteten Maschinenteils verstrichen ist. Gegebenenfalls können auch Prozessdaten zu einer zweiten oder einer oder mehreren höheren Aggregationsstufen gelöscht werden, wenn eine geeignet lange Zeitdauer beim Betrieb des betrachteten Maschinenteils verstrichen ist. Je länger der Betrieb des betrachteten Maschinenteils andauert, umso eher können Messwerte bzw. Rohdaten und Prozessdaten von Aggregationsstufen gelöscht werden, die schon länger in der Vergangenheit liegen. Beispielsweise könnte man Jahresdatensätze und Monatsdatensätze über mehrere Jahre aufbewahren bzw. im Prozessdaten-Datenspeicher belassen. Im Unterschied dazu könnte man von den Tagesdatensätzen nur einige Tagesdatensätze mit aufbewahren bzw. auch im Prozessdaten-Datenspeicher belassen, beispielsweise nur Tagesdatensätze aus der jüngeren Vergangenheit bezogen auf einen bestimmten Zeitpunkt. Denkbar wäre beispielsweise zu einem bestimmten Zeitpunkt X, an dem das Maschinenteil schon Y volle Jahre in Betrieb ist, folgendes Szenario: Es sind alle Jahresdatensätze der Y Jahre vorhanden.

Es sind die Monatsdatensätze des abgelaufenen Kalenderjahres und des aktuellen Kalenderjahres bis zum Zeitpunkt X vorhanden.

Es sind die Tagesdatensätze des abgelaufenen Monats und des aktuellen Monats bis zum Zeitpunkt X vorhanden.

Im Ergebnis entspricht dies einer Art gleitender Aufbewahrungszeitspanne bzw. einer Art gleitender Speicherzeitspanne. Die gleitende Speicherzeitspanne für Tagesdatensätze (Tages-Aggregationen) könnte beispielsweise eine Woche oder ein Monat sein. Die gleitende Speicherzeitspanne für Wochendatensätze (Wochen-Aggregationen) oder Monatsdatensätze (Monats-Aggregationen) könnte beispielsweise ein Jahr sein. Auf diese Art und Weise kann die Speicherkapazität des Prozessdaten-Datenspeichers optimal ausgenutzt werden.

Daten betreffend das betrachtete Maschinenteil als solches, welche auch als Maschinenteil-Daten bezeichnet werden können, werden in einem Maschinenteil-Datenspeicher gespeichert. Solche Daten können in einem Maschinenteil-Datenspeicher aber schon vorhanden sein, bevor das Maschinenteil in Betrieb genommen wird. Dabei kann es sich insbesondere um Daten betreffend den konstruktiven Aufbau und die Funktionsweise des Maschinenteils sowie um vorgeschriebene oder vorgegebene Betriebsdaten handeln.

Soweit in dieser Anmeldung die Begriffe "Zeitspanne", "Zeitabstand" und "Zeitraum" verwendet werden, ist folgendes zu beachten:
"Zeitspanne" bedeutet eine Zeit, während der ein vorzugsweise kontinuierlicher Betrieb eines Maschinenteils erfolgt und demzufolge vorzugsweise kontinuierlich Messwerte zu einer Prozessgröße erfasst werden können (siehe Anspruch 1). "Zeitabstand" bedeutet eine Zeit zwischen zwei aufeinanderfolgenden Auswertungen von Prozessdaten einer Aggregationsstufe (siehe Anspruch 2 und Anspruch 3) "Zeitraum" bedeutet eine Zeit, in welcher die Erzeugung von Prozessdaten einer Aggregationsstufe vorgenommen wird (siehe Ansprüche 5, 6 und 7) oder eine Zeit, nach deren Ablauf eine Löschung von Prozessdaten einer Aggregationsstufe vorgenommen wird (siehe Anspruch 8).

Nachfolgend soll die Erfindung anhand eines Ausführungsbeispiels und unter Bezugnahme auf die Figuren 1 bis 6 näher beschrieben werden. Es zeigen:
- Fig.1: PUR-Dosiermaschine mit einem Mischkopf
- Fig.2a: Perspektive Darstellung eines Mischkopfs
- Fig.2b: Längsschnitt des Mischkopfs aus der Figur 2a
- Fig.3: Messwerte (Rohdaten) und Auswertung gemäß Tages-Aggregation
- Fig.4: Tages-Aggregation und Wochen-Aggregation
- Fig.5: Tages-Aggregation und Monats-Aggregation
- Fig.6: Messwerte (Rohdaten) und Auswertung gemäß Tages-Aggregation in einer alternativen Ausführungsform.

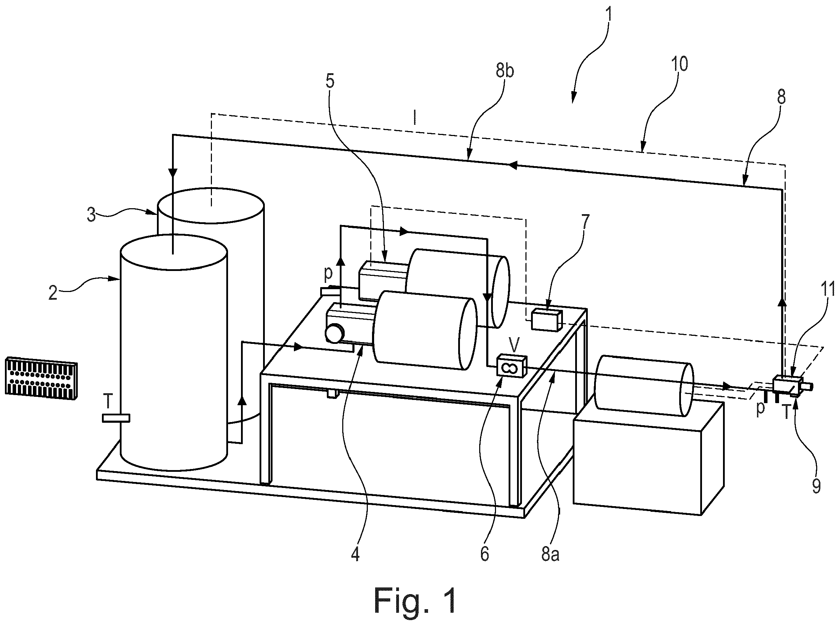

Die Figur 1 zeigt in schematischer Darstellung eine insgesamt mit dem Bezugszeichen 1 gekennzeichnete PUR-Dosiermaschine. Diese umfasst Vorratsbehälter 2 und 3 für die Komponenten Polyol und Isocyanat, Dosierpumpen 4 und 5 für diese beiden Komponenten sowie jeweils einen Volumenstromzähler 6 und 7. In der Praxis werden solche Vorratsbehälter 2, 3 auch Tages- bzw. Arbeitsbehälter genannt. Anstelle von PUR können auch andere Reaktivkunststoffe verarbeitet werden. Beispiele hierfür sind: Epoxidharz (aus den Komponenten Harz und Härter), Polyamid bzw. Nylon (aus katalysiertem Caprolactam und aktiviertem Caprolactam), DPCD. Für die Herstellung dieser Reaktivkunststoffe können 2 bis n Komponenten verarbeitet werden, deren Dosierstrang jeweils aus Tagesbehälter (Vorratsbehälter), Dosierpumpe, Volumenstromzähler sowie Leitungssystem besteht. In der Figur 1 ist eine fett dargestellte und mit Pfeilen versehen Linie 8 für den Strömungsweg einer Komponente zu sehen. Ein solcher Strömungsweg umfasst eine Vorlaufleitung 8a, welche vom Vorratsbehälter 2 ausgeht und über die zugehörige Dosierpumpe 4 und den Volumenstromzähler 6 zu dem Mischkopf 9 verläuft, und eine von dem Mischkopf 9 zum Vorratsbehälter 2 verlaufende Rücklaufleitung 8b. Die gestrichelt dargestellte Linie 10 bildet den Strömungsweg für die andere Komponente. Nicht dargestellt ist ein Formwerkzeug, an welches der Mischkopf 9 bei dessen Betrieb angedockt ist oder in das offen eingetragen wird. Ein erster Datenspeicher 11 ist direkt an dem Mischkopf 9 angebracht. Dieser Datenspeicher 11 ist derart an oder in den Mischkopf 9 eingebaut, dass er vor äußeren Einflüssen, insbesondere vor Verschmutzung oder Beschädigung gesichert ist.

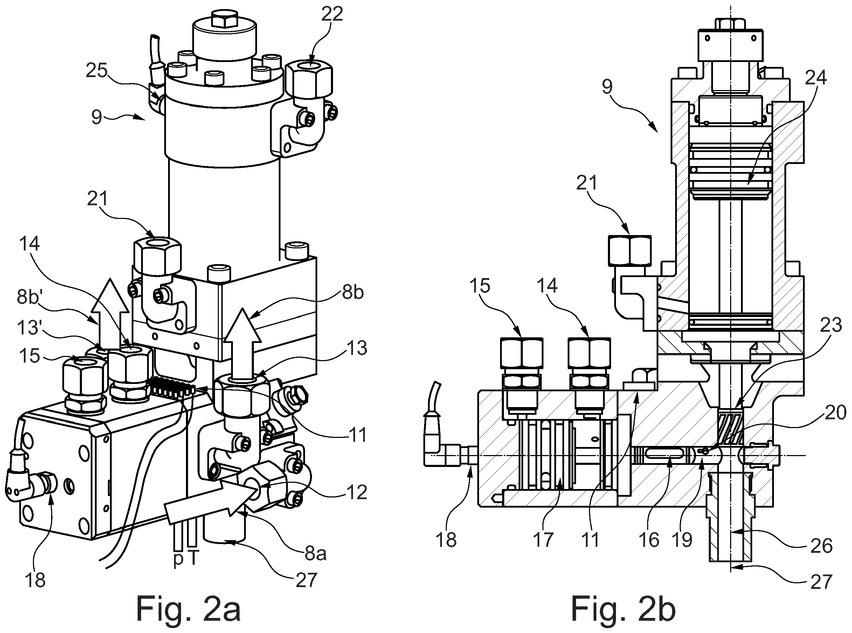

Die Figuren 2a und 2b zeigen einen Mischkopf 9 in verschiedenen Ansichten, nämlich einmal in einer perspektivischen Ansicht (Figur 2a) und in einer Schnittdarstellung (Figur 2b).

Der Mischkopf 9 weist eine Reihe von Anschlüssen für den Vorlauf und den Rücklauf der beiden Komponenten Polyol und Isocyanat auf, nämlich:
- einen Vorlauf-Anschluss 12 für die Vorlaufleitung 8a der ersten Komponente;
- einen Rücklauf-Anschluss 13 für die Rücklaufleitung 8b der ersten Komponente;
- einen Rücklauf-Anschluss 13' für die Rücklaufleitung 8b` der zweiten Komponente.

Für die Betätigung des Steuerkolbens 16 (in der Figur 2b im geöffneten Zustand dargestellt) ist ein mit dem Steuerkolben 16 in Wirkverbindung stehender Hydraulikkolben 17 vorgesehen. Für die Betätigung des Hydraulikkolbens 17 und damit für die Betätigung des Steuerkolbens 16, sind folgende Anschlüsse vorgesehen:
- ein Hydraulikanschluss 14 für das Öffnen des Steuerkolbens 16,
- ein Hydraulikanschluss 15 für das Schließen des Steuerkolbens 16.

Für die Betätigung des Reinigungskolbens 23 (in der Figur 2b in einer hinteren, zurückgezogenen Position dargestellt) ist ein mit dem Reinigungskolben 23 in Wirkverbindung stehender Hydraulikkolben 24 vorgesehen. Für die Betätigung des Hydraulikkolbens 24 und damit für die Betätigung des Reinigungskolbens 23 sind folgende Anschlüsse vorgesehen:
- ein Hydraulikanschluss 21, um den Reinigungskolben 23 in eine hintere, zurückgezogene Position verfahren zu können,
- ein Hydraulikanschluss 22, um den Reinigungskolben 23 in eine vordere Position verfahren zu können.

Mittels eines Näherungsschalters 18 kann die hintere bzw. zurückgefahrene bzw. offene Position des Steuerkolbens 16 gemessen werden. Mittels eines Näherungsschalters 25 kann die hintere bzw. zurückgefahrene Position des Reinigungskolbens 23 gemessen werden. Anstelle des Begriffs "Näherungsschalter" sind auch die Begriffe "Initiator" oder "Endschalter" gebräuchlich.

In der Mischkammer 19 werden die reaktiven Komponenten unter hohem Drucküber Komponentendüsen verdüst und unter hoher Geschwindigkeit zusammengebracht. Wenn sich der Steuerkolben in seiner hinteren Position befindet, was dem geöffneten Zustand entspricht, kann das Gemisch von der Mischkammer 19 über die Auslaufkammer 26 und den Mischkopf-Auslauf 27 ausgetragen werden. Das Bezugszeichen 20 bezeichnet einen Düseneingang bzw. eine Impfbohrung, über die die erste Komponente (z.B. Polyol) eingebracht werden kann. Spiegelsymmetrisch zur Schnittebene / Längsebene befindet sich ein zweiter Düseneingang bzw. eine zweite Impfbohrung, über die die zweite Komponente (z.B. Isocyanat) eingebracht werden kann.

Beim Betrieb des Mischkopfs 9 werden Polyol und Isocyanat in dem Mischkopf zu einem reaktionsfähigen PUR-Material vermischt und in ein Formwerkzeug ausgetragen, um ein PUR-Formteil herzustellen. Alternativ zur PUR-Herstellung und PUR-Verarbeitung können auch andere Reaktivkunststoffe wie zum Beispiel Epoxidharz (aus den Komponenten Harz und Härter), Polyamid bzw. Nylon (aus katalysiertem Caprolactam und aktiviertem Caprolactam), DPCD, etc. hergestellt und verarbeitet werden. Bei diesem Betrieb fällt eine Vielzahl von Prozessmessgrößen an, die in unveränderter Form als Rohdaten gespeichert werden können. Bei einem solchen Mischkopf 9 kann es sich um Messwerte zu den nachfolgend genannten Prozessgrößen handeln: Schließzeit, Öffnungszeit, Schusszeit, Zeit zwischen zwei Schüssen, Gesamtschusszahl, und die Gesamtzahl von Reinigungskolben-Hüben.

Diese Messwerte können an unterschiedlichen Stellen der Dosiermaschine 1 durch geeignete Sensoren erfasst werden, teilweise auch mehrfach. Beispielsweise kann die Temperatur einer Komponente sowohl im Tagesbehälter 2 bzw. 3 erfasst werden als auch in der jeweiligen Hochruckleitung unmittelbar vor dem Mischkopf 9. Ebenso kann der Druck in der Hochdruckleitung nach der Dosierpumpe und direkt vor dem Mischkopf erfasst werden.

Im vorliegenden Ausführungsbeispiel soll als Prozessgröße die Öffnungszeit betrachtet werden. Es handelt sich um die sogenannte Steuerkolbenlaufzeit zum Öffnen des Mischkopfs. Das ist diejenige Zeit, welche der Steuerkolben des Mischkopfs benötigt, um von einer Position entsprechend einem geschlossenen Zustand des Mischkopfs in eine Position entsprechend einem geöffnetem Zustand des Mischkopfs zu gelangen. Für jeden Schuss wird diese Zeit in Millisekunden gemessen und aufgezeichnet.

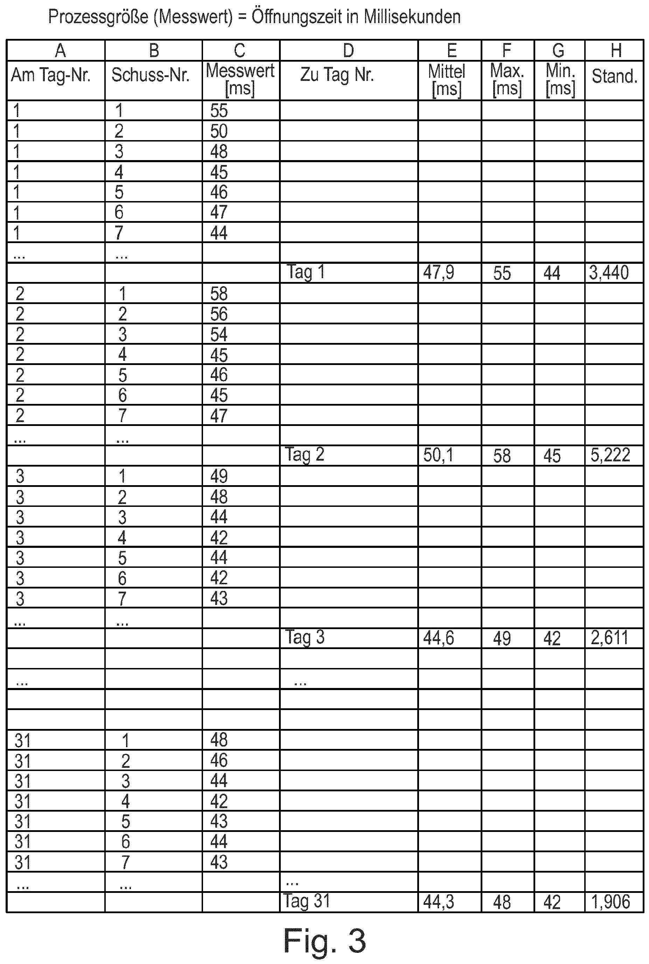

Anhand der Figuren 3 bis 5 soll das erfindungsgemäße Verfahren beim Betrieb des Mischkopfs 9 näher erläutert werden. Als Beispiel für eine beim Betrieb des Mischkopfs gemessene Prozessgröße soll die vorstehend näher beschriebene Öffnungszeit des Steuerkolbens 16 dienen. Die Ermittlung der Öffnungszeit des Steuerkolbens erfolgt wie nachstehend beschrieben.

Der Steuerkolben 16 des Mischkopfs 9 wird hydraulisch angetrieben. Über ein Hydraulikaggregat wird Hydrauliköl unter Druck versetzt (zwischen 80 und 200 bar) und über ein Leitungssystem zu einem Wegeventil geführt sowie die drucklose Leitung zum Tank des Hydraulikaggregats zurückgeführt. Der Steuerkolben 16 ist mit dem Hydraulikkolben 17 gekoppelt. Wenn das Wegeventil schaltet, so wird die Leitung zum Schließen bzw. Halten des geschlossenen Zustands des Steuerkolbens 16 von einem mit Druck beaufschlagtem Zustand in den einen drucklosen Zustand umgeschaltet und die Leitung zum Öffnen des Steuerkolbens vom drucklosen zum Druck beaufschlagtem Zustand. Damit gelangt unter Druck stehendes Hydrauliköl über den Hydraulikanschluss 14 auf diejenige Seite des Hydraulikkolbens 17, welche dem Steuerkolben 16 zugewandt ist. Infolgedessen vollzieht der Hydraulikkolben 17 mit dem gekoppeltem Steuerkolben 16 eine Linearbewegung bis in die Endlage des komplett geöffneten Zustands. Dies entspricht der hinteren Position des Hydraulikkolbens 17, wie sie in der Figur 2b dargestellt ist. Diese Endlage wird mit dem Endschalter 18 abgefragt, welcher auch als Näherungsschalter oder Initiator bezeichnet werden kann. Die Steuerung der Maschine ermittelt die Zeit zwischen der Ansteuerung des Wegeventils und dem Erscheinen des Endschalter-Signals. Diese Zeit wird pro Schuss als Öffnungszeit des Steuerkolbens in der Steuerung abgelegt bzw. gespeichert.

Die Figur 3 zeigt tabellarisch die über mehrere Tage für jeden Schuss aufgezeichneten Messwerte für die Öffnungszeit des Steuerkolbens. Die Spalten A bis C betreffen die Messwerte bzw. Rohdaten und die Spalten D bis H betreffen die Prozessdaten der ersten Aggregationsstufe. Im vorliegenden Beispiel wurde als erste Aggregationsstufe ein Tag zugrunde gelegt. Man kann diese Prozessdaten insoweit auch als Tages-Aggregation bezeichnen.

Die Tabelle in der Figur 3 wie folgt zu verstehen:

| | |
|---|---|
| Spalte A | Nummer des betrachteten Tages |
| Spalte B | Nummer des Schuss an dem Tag in Spalte A |
| Spalte C | gemessener Wert für die Öffnungszeit des Schuss |
| Spalte D | Angabe des Tages, dessen Messwerte statisch ausgewertet worden sind. |
| Spalte E | Mittelwert bezogen auf den angezeigten Tag |
| Spalte F | Maximalwert bzw. Maximum bezogen auf den angezeigten Tag |
| Spalte G | Minimalwert bzw. Minimum bezogen auf den angezeigten Tag |
| Spalte H | Standardabweichung bezogen auf den angezeigten Tag |

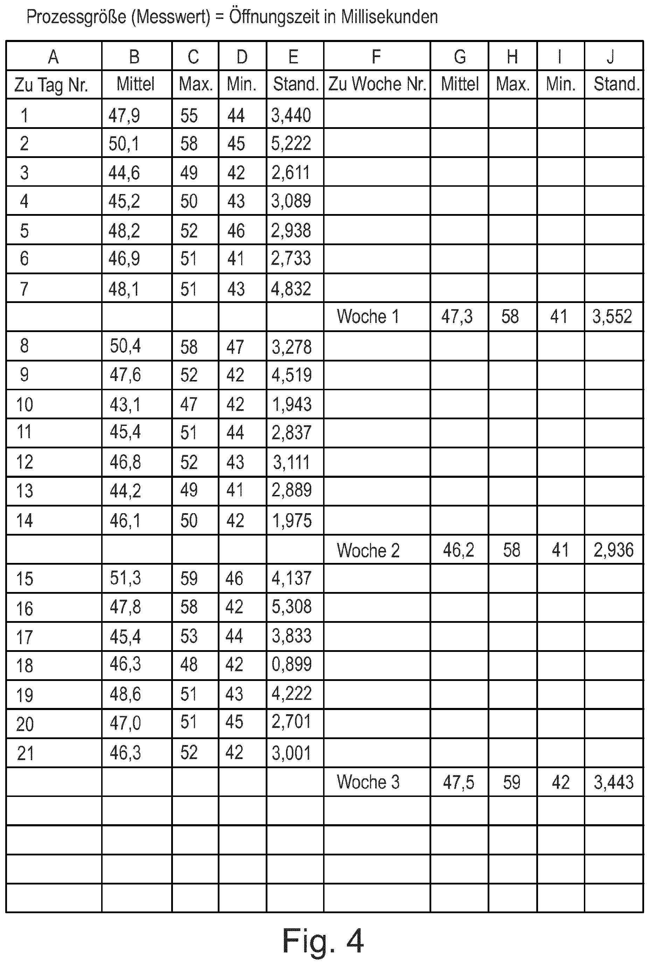

Die Figur 4 zeigt tabellarisch für einen Betrachtungszeitraum von mehreren Wochen eine statistische Auswertung von Prozessdaten PD1 der ersten Aggregationsstufe als Tagesdatensatz bzw. Tages-Aggregation zu Prozessdaten PD2 einer zweiten Aggregationsstufe als Wochendatensatz bzw. Wochen-Aggregation. Die Spalten A bis E betreffen die Prozessdaten PD1 der ersten Aggregationsstufe und die Spalten F bis J betreffen die Prozessdaten PD2 der zweiten Aggregationsstufe.

Die Tabelle in der Figur 4 ist wie folgt zu verstehen:

| | |
|---|---|
| Spalte A | Nummer des betrachteten Tages |
| Spalte B | Tagesdatensätze zum Mittelwert bezogen auf den angezeigten Tag |
| Spalte C | Tagesdatensätze zum Maximum bezogen den angezeigten Tag |
| Spalte D | Tagesdatensätze zum Minimum bezogen auf den angezeigten Tag |
| Spalte E | Tagesdatensätze zur Standardabweichung bezogen auf den angezeigten Tag |
| Spalte F | Angabe der Woche, deren Tagesdatensätze und damit deren Prozessdaten zweiter Art statisch ausgewertet worden sind. |
| Spalte G | Mittelwert bezogen auf die angezeigte Woche |
| Spalte H | Maximum bezogen auf die angezeigte Woche |
| Spalte I | Minimum bezogen auf die angezeigte Woche |
| Spalte J | Standardabweichung bezogen auf die angezeigte Woche |

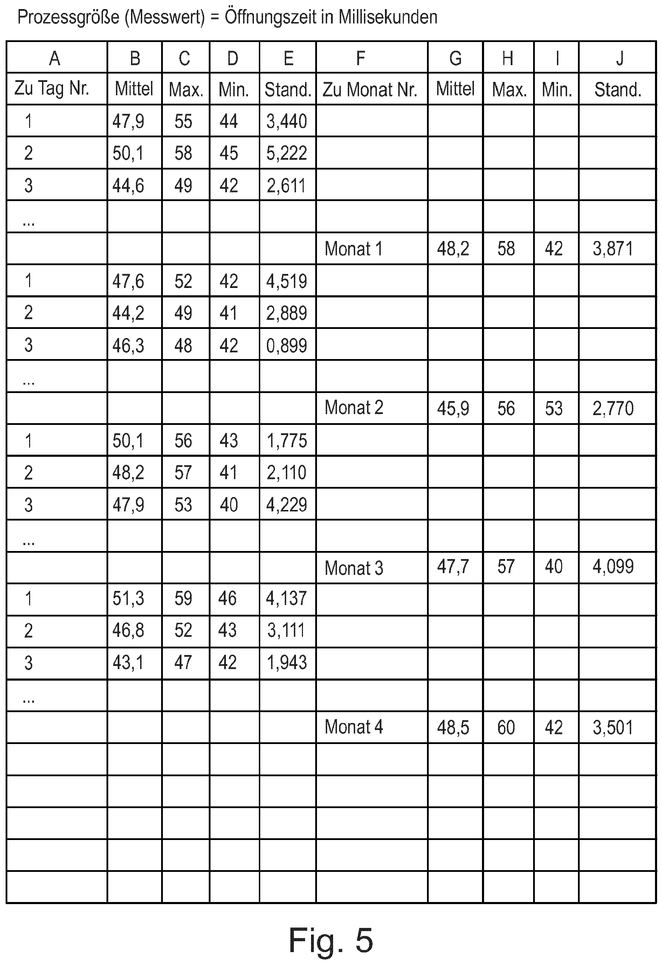

Die Figur 5 zeigt eine zu Figur 4 alternative statistische Auswertung, wobei im Unterschied zur Figur 4 als zweite Aggregationsstufe ein Monat anstelle von einer Woche zugrunde gelegt worden ist. Die Figur 5 zeigt tabellarisch für einen Betrachtungszeitraum von mehreren Monaten eine statistische Auswertung von Prozessdaten PD1 der ersten Aggregationsstufe als Tagesdatensatz (Tages-Aggregation) zu Prozessdaten PD2 einer zweiten Aggregationsstufe als Monatsdatensatz (Monats-Aggregation). Die Spalten A bis E betreffen die Prozessdaten PD1 der ersten Aggregationsstufe und die Spalten F bis J betreffen die Prozessdaten PD2 der zweiten Aggregationsstufe.

Die Tabelle in der Figur 5 ist wie folgt zu verstehen:

| | |
|---|---|
| Spalte A | Nummer des betrachteten Tages bezüglich des Monats in Spalte F |
| Spalte B | Tagesdatensätze zum Mittelwert bezogen auf den angezeigten Tag |
| Spalte C | Tagesdatensätze zum Maximum bezogen den angezeigten Tag |
| Spalte D | Tagesdatensätze zum Minimum bezogen auf den angezeigten Tag |
| Spalte E | Tagesdatensätze zur Standardabweichung bezogen auf den angezeigten Tag |
| Spalte F | Angabe des Monats, dessen Tagesdatensätze und damit dessen Prozessdaten zweiter Art statisch ausgewertet worden sind. |
| Spalte G | Mittelwert bezogen auf den angezeigten Monat |
| Spalte H | Maximum bezogen auf den angezeigten Monat |
| Spalte I | Minimum bezogen auf den angezeigten Monat |
| Spalte J | Standardabweichung bezogen auf den angezeigten Monat |

Die Figur 6 zeigt tabellarisch die über mehrere Tage für jeden Schuss aufgezeichneten Messwerte für die Öffnungszeit des Steuerkolbens. Die Spalten A bis C betreffen die Rohdaten und die Spalten D bis H betreffen die Prozessdaten der ersten Aggregationsstufe. Im vorliegenden Beispiel wurde als erste Aggregationsstufe ein Tag zugrunde gelegt. Man kann diese Prozessdaten insoweit auch als Tages-Aggregation bezeichnen. Im Unterschied zur Figur 3 erfolgt vorliegend eine kontinuierliche statistische Auswertung der Messwerte bzw. der Rohdaten ab dem ersten Schuss.

Die Tabelle in der Figur 6 wie folgt zu verstehen:

| | |
|---|---|
| Spalte A | Nummer des betrachteten Tages |
| Spalte B | Nummer des Schuss an dem Tag in Spalte A |
| Spalte C | gemessener Wert für die Öffnungszeit des Schuss |
| Spalte D | Angabe des Tages, dessen Messwerte statisch ausgewertet worden sind. |
| Spalte E | Mittelwert bezogen auf die in Spalte F angegebene Anzahl der Messwerte bei der kontinuierlichen Mittelwertbildung; in der Schriftart "fett" und "kursiv" dargestellt ist der Mittelwert bezogen auf den angezeigten Tag |
| Spalte F | Anzahl der Messwerte, die bei der kontinuierlichen Mittelwertbildung berücksichtigt werden. |

Diejenigen Messwerte, welche schon verarbeitet worden sind, können gelöscht werden. Im Unterschied zur Figur 3 wird somit nur eine sehr kleine Menge an Rohdaten über den Tag mitgenommen bzw. fortgeführt, bis die Tagesaggregation zu diesen Messwerten bzw. Rohdaten abgeschlossen ist.

Die Messwerte zu den zu betrachtenden Prozessgrößen können an unterschiedlichen Stellen der Dosiermaschine 1 durch geeignete Sensoren erfasst werden, teilweise auch mehrfach. Beispielsweise kann die Temperatur einer Komponente sowohl im Tagesbehälter 2 bzw. 3 erfasst werden als auch in der jeweiligen Hochruckleitung unmittelbar vor dem Mischkopf 9. Ebenso kann der Druck in der Hochdruckleitung nach der Dosierpumpe und direkt vor dem Mischkopf erfasst werden.

### Bezugszeichenliste

- 1: PUR-Dosiermaschine
- 2: Erster Vorratsbehälter
- 3: Zweiter Vorratsbehälter
- 4, 5: Dosierpumpen
- 6, 7: Volumenstromzähler
- 8: Strömungsweg erste Komponente
- 8a: Vorlaufleitung der ersten Komponente
- 8b: Rücklaufleitung der ersten Komponente
- 8b': Rücklaufleitung der zweiten Komponente
- 9: Mischkopf
- 10: Strömungsweg zweite Komponente
- 11: Datenspeicher
- 12: Vorlauf-Anschluss am Mischkopf (1. Komponente)
- 13: Rücklauf-Anschluss am Mischkopf (1. Komponente)
- 13': Rücklauf-Anschluss am Mischkopf (2. Komponente)
- 14: Hydraulikanschluss für das Öffnen des Steuerkolben
- 15: Hydraulikanschluss für das Schließen des Steuerkolbens
- 16: Steuerkolben im geöffneten Zustand
- 17: Hydraulikkolben für Steuerkolben
- 18: Initiator / Näherungsschalter / Endschalter für Steuerkolben (offen)
- 19: Mischkammer
- 20: Düseneingang bzw. Impfbohrung
- 21: Hydraulikanschluss Reinigungskolben hinten
- 22: Hydraulikanschluss Reinigungskolben vorne
- 23: Reinigungskolben
- 24: Hydraulikkolben für Reinigungskolben
- 25: Initiator / Näherungsschalter / Endschalter für Reinigungskolben (hinten)
- 26: Auslaufkammer
- 27: Mischkopf-Auslauf
- P: Drucksensor
- T: Temperatur-Sensor

## Patentansprüche

1. Verfahren zur Überwachung eines Maschinenteils, nämlich eines Bauteils einer Maschine, beispielsweise Mischkopf, Spritzgießwerkzeug, Plastifizierung und Roboter- bzw. Robotergreifer, wobei Daten betreffend das Maschinenteil als solches, insbesondere Daten betreffend den konstruktiven Aufbau, die Funktionsweise, und vorgeschriebene Betriebsdaten, als Maschinenteildaten in einem Maschinenteildatenspeicher gespeichert werden oder in einem Maschinenteildatenspeicher vorhanden sind oder vorhanden sein können, wobei Prozessgrößen gemessen werden, welche beim Betrieb des Maschinenteils anfallen, wobei Messwerte zu diesen Prozessgrößen generiert werden, wobei diese Messwerte einer Steuerung der Maschine zugeführt und von einem Datenverarbeitungsprogramm ausgewertet werden,
**dadurch gekennzeichnet, dass**
Messwerte zu einer bestimmten Prozessgröße während einer ersten Zeitspanne T1 erfasst und einer statistischen Auswertung zugeführt_werden, dass nach Ablauf oder während der ersten Zeitspanne T1 automatisch eine statistische Auswertung der in der ersten Zeitspanne T1 erfassten Messwerte vorgenommen wird, wobei eine Datenaggregation durchgeführt wird, wobei Prozessdaten PD1 einer ersten Aggregationsstufe erzeugt und in einem Prozessdaten-Datenspeicher gespeichert werden, wobei die Datenaggregation mit einer Datenkomprimierung einhergeht und die Prozessdaten PD1 der ersten Aggregationsstufe eine geringere Datenmenge bilden als die in der ersten Zeitspanne T1 erfassten Messwerte, wobei die Erfassung von Messwerten zu dieser Prozessgröße nach Ablauf der ersten Zeitspanne T1 während einer zweiten Zeitspanne T2 fortgesetzt wird, wobei sich die zweite Zeitspanne T2 vorzugsweise unmittelbar an den Ablauf der ersten Zeitspanne T1 anschließt, dass nach Ablauf oder während der zweiten Zeitspanne T2 automatisch eine statistische Auswertung der in der zweiten Zeitspanne T2 erfassten Messwerte vorgenommen wird, wobei erneut eine Datenaggregation durchgeführt wird, wobei erneut Prozessdaten PD1 der ersten Aggregationsstufe erzeugt und in dem Prozessdaten-Datenspeicher gespeichert werden, wobei diese erneut erzeugten Prozessdaten PD1 der ersten Aggregationsstufe eine geringere Datenmenge darstellen als die in der zweiten Zeitspanne T2 erfassten Messwerte, und wobei die vorgenannten Schritte über weitere Zeitspannen T3, T4, ... Tn wiederholt werden.

2. Verfahren nach Anspruch 1
**dadurch gekennzeichnet, dass**
nach Ablauf einer Mehrzahl von Zeitspannen T1+T2+T3... vorgesehen ist, dass automatisch eine statistische Auswertung von Prozessdaten PD1 der ersten Aggregationsstufe aus allen abgelaufenen Zeitspannen oder zu einer Anzahl an ausgewählten abgelaufenen Zeitspannen erfolgt, wobei Prozessdaten PD2 einer zweiten Aggregationsstufe erzeugt und in dem Prozessdaten-Datenspeicher gespeichert werden, wobei die Erzeugung von Prozessdaten PD2 der zweiten Aggregationsstufe vorzugsweise in regelmäßigen Zeitabständen wiederholt wird.

3. Verfahren nach Anspruch 2,
**dadurch gekennzeichnet, dass**
nach Ablauf einer Mehrzahl von Zeitspannen T1+T2+T3... automatisch vorgesehen ist, dass eine statistische Auswertung von Prozessdaten PD2 der zweiten Aggregationsstufe aus allen bis dahin erzeugten Prozessdaten PD2 oder zu einer Anzahl an ausgewählten der bis dahin erzeugten Prozessdaten PD2 erfolgt, wobei Prozessdaten PD3 einer dritten Aggregationsstufe erzeugt und in dem Prozessdaten-Datenspeicher gespeichert werden, wobei die Erzeugung von Prozessdaten PD3 der dritten Aggregationsstufe vorzugsweise in regelmäßigen Zeitabständen wiederholt wird.

4. Verfahren nach einem der vorstehenden Ansprüche,
**dadurch gekennzeichnet, dass**
als Zeitspanne Tn (n = 1, 2, 3, ...) für die Erfassung von Messwerten zu einer Prozessgröße eine Zeitspanne von mehreren Stunden, vorzugsweise ein Tag, vorgesehen ist, wobei die statistische Auswertung einen Stundendatensatz an Prozessdaten PD1 einer ersten Aggregationsstufe (Stunden-Aggregation) oder einen Tagesdatensatz an Prozessdaten PD1 einer ersten Aggregationsstufe (Tages-Aggregation) ergibt.

5. Verfahren nach einem der vorstehenden Ansprüche,
**dadurch gekennzeichnet, dass**
die Erzeugung von Prozessdaten PD1 der ersten Aggregationsstufe über einen Zeitraum von mehreren Tagen, vorzugsweise über einen Zeitraum von einer Woche, vorgenommen wird, wobei die statistische Auswertung der Prozessdaten PD1 der ersten Aggregationsstufe je nach Art der statistischen Auswertung einen Tagesdatensatz (Tages-Aggregation) PD2 an Prozessdaten einer zweiten Aggregationsstufe oder einen Wochendatensatz (Wochen-Aggregation) PD2 an Prozessdaten PD2 einer zweiten Aggregationsstufe ergibt.

6. Verfahren nach einem der Ansprüche 2 bis 5,
**dadurch gekennzeichnet, dass**
die Erzeugung von Prozessdaten PD2 der zweiten Aggregationsstufe über einen Zeitraum von mehreren Wochen, vorzugsweise über einen Zeitraum von einem oder mehreren Monaten, vorgenommen wird, wobei die statistische Auswertung der Prozessdaten PD2 der zweiten Aggregationsstufe je nach Art der statistischen Auswertung einen Wochendatensatz (Wochen-Aggregation) PD3 an Prozessdaten einer dritten Aggregationsstufe oder einen Monatsdatensatz (Monats-Aggregation) PD3 an Prozessdaten PD3 einer dritten Aggregationsstufe ergibt.

7. Verfahren nach einem der Ansprüche 3 bis 6,
**dadurch gekennzeichnet, dass**
dass nach Ablauf von vorgebbaren Zeiträumen mehrere oder alle Prozessdaten PD3 der dritten Aggregationsstufe einer weiteren statistischen Auswertung zugeführt und Prozessdaten PD4 einer vierten Aggregationsstufe erzeugt werden.

8. Verfahren nach einem der vorstehenden Ansprüche,
**dadurch gekennzeichnet, dass**
Prozessdaten PD1 einer ersten Aggregationsstufe und/oder Prozessdaten PD2 einer zweiten Aggregationsstufe und/oder Prozessdaten PD3 einer dritten Aggregationsstufe und/oder Prozessdaten PD4 einer vierten Aggregationsstufe nach Ablauf eines vorgebbarem Zeitraums gelöscht werden, wobei für Prozessdaten unterschiedlicher Aggregationsstufen unterschiedliche Zeiträume vorgesehen sind oder sein können, nach deren Ablauf die Löschung der Prozessdaten in dem Prozessdaten-Datenspeicher vorgenommen wird.

9. Verfahren nach einem der vorstehenden Ansprüche,
**dadurch gekennzeichnet, dass**
sich der Maschinenteil-Datenspeicher und/oder der Prozessdaten-Datenspeicher an oder in dem Maschinenteil befinden, insbesondere als Speicherchip, und vorzugsweise einen gemeinsamen Datenspeicher bilden, oder dass eine Cloud-basierte Speicherung vorgesehen wird, insbesondere eine Cloud-basierte Speicherung mit Maschinenteil-Codierung.

10. Verfahren nach einem der vorstehenden Ansprüche
**dadurch gekennzeichnet, dass**
die Prozessdaten der ersten und der zweiten Aggregationsstufe, sowie gegebenenfalls weiterer Aggregationsstufen, vom gleichen Typ sind, beispielsweise vom Typ "Mittelwert", "Maximalwert", "Minimalwert", "Standard-Abweichung".

11. Verfahren nach einem der vorstehenden Ansprüche
**dadurch gekennzeichnet, dass**
während eines kontinuierlichen Betriebs des Maschinenteils die Erfassung von Messwerten über mehrere sich unmittelbar aneinander anschließende Zeitspannen erfolgt.
